(19) **Europäisches Patentamt**
**European Patent Office**
**Office européen des brevets**

(11) **EP 4 379 428 A1**

(12) **EUROPEAN PATENT APPLICATION**

(43) Date of publication:
**05.06.2024 Bulletin 2024/23**

(21) Application number: **22211194.0**

(22) Date of filing: **02.12.2022**

(51) International Patent Classification (IPC):
**G01T 1/17** *(2006.01)*     **G01T 1/20** *(2006.01)*

(52) Cooperative Patent Classification (CPC):
**G01T 1/247; G01T 1/17; G01T 1/242**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Koninklijke Philips N.V.**
**5656 AG Eindhoven (NL)**

(72) Inventors:
• **SCHÄFER, Dirk**
**Eindhoven (NL)**

• **SCHNELLBÄCHER, Nikolas David**
**Eindhoven (NL)**
• **RUETTEN, Walter**
**5656AG Eindhoven (NL)**
• **SIMON, Matthias**
**5656AG Eindhoven (NL)**

(74) Representative: **Philips Intellectual Property &
Standards**
**High Tech Campus 52**
**5656 AG Eindhoven (NL)**

(54) **MACHINE LEARNING-BASED LAG CORRECTION FOR FRONT LAYER DETECTOR IN A DUAL-LAYER SYSTEM**

(57)     System (SYS) and related method for acquisition lag correction in X-ray imaging. The system comprises an input interface (IN) for receiving input including an input image acquired by a front layer detector (FLD) in a multi-energy X-ray imaging apparatus (IA). A corrector component (CC) processes the input image into a corrected version that represents an estimate for image information at lower acquisition lag than the acquisition lag experienced for the input image. Specifically, effects of lag and associated artifacts are removed, and the corrected version is an estimate for the input image in an acquisition setup where there was no such acquisition lag.

**FIG. 1**

EP 4 379 428 A1

**Description**

FIELD OF THE INVENTION

The invention relates to a system for acquisition lag correction in X-ray based imaging, to an imaging arrangement including such a system, to a training system for training a machine learning model for use in such a system, to a training data generator system for generating training data for use in such a training system, to related methods, to a computer program element and to a computer readable medium.

BACKGROUND OF THE INVENTION

For 2D and 3D imaging lag artifacts are a significant problem in X-ray based imaging. They originate from a delayed signal build-up in detector pixels, especially in detector areas which were in an attenuative object's shadow, and are then irradiated by the direct X-ray beam afterwards. Another frequent source of lag artifacts are sequences with some images acquired with high X-ray dose followed by low dose images. In such situations, there are delayed signal spillovers from high dose images that disturb low dose images. Both lag effects lead to artifacts in 2D imaging and tomographic 3D imaging, such as in cone beam CT (CBCT) volumes or others.

Some such artifacts can be mitigated by applying hardware solutions, such as backside reset light systems as described for example in T. Ducourant et al., "Latest advancements in state-of-the-art aSi-based X-ray Flat Panel Detectors", published in Proc. SPIE 10573, Medical Imaging (2018).

However, artifacts have been found to still remain in particular in spectral imaging. Spectral imaging is multi-energy imaging where plural sets of projection data is acquired at different radiation energy ranges. These sets can be computationally combined to yield imagery in 2D or 3D with material specific contrast which is useful, amongst others, in therapy and diagnostics.

SUMMARY OF THE INVENTION

There may be a need for improved X-ray imaging, in particular for improved spectral imaging.

An object of the present invention is achieved by the subject matter of the independent claims where further embodiments are incorporated in the dependent claims. It should be noted that the following described aspect of the invention equally applies to the imaging arrangement including the system, to the training system for training the machine learning model for use in the system, to the training data generator system for generating training data for use in the training system, to the related methods, to the computer program element and to the computer readable medium.

According to a first aspect of the invention there is provided a system for acquisition lag correction in X-ray imaging, comprising:

an input interface for receiving input including an input image acquired by a front layer detector in a multi-energy X-ray imaging apparatus; and
a corrector component configured to process the input image into a corrected version that represents an estimate for image information at lower acquisition lag than the acquisition lag experienced for the input image.

In embodiments, the processing by the corrector component includes scaling the input image with a scaling factor obtained based on a series of prior input images acquired by the multi-energy X-ray imaging apparatus.

In embodiments, the said input further includes an additional image acquired by a back-layer detector of the multi-energy X-ray imaging apparatus. The back layer has preferably a circuitry for reducing temporal lag effects (such a backside reset light or other hardware solution) and this is preferably activated when the additional image is acquired by the back-layer detector. This 2-channel input data allows for better performance as will be explained below.

In embodiments, the corrector component is implemented based on a trained machine learning model.

In embodiments, the machine learning, ML, model is previously trained based on a supervised or unsupervised learning setup.

In embodiments, the trained ML model includes an artificial neural network.

In embodiments, the artificial neural network is configured for multi-scale processing. For example, an artificial neural network (NN) of the U-net type architecture may be used. Multi-scale processing using filtering or other techniques, not necessarily of the NN type, is also envisaged herein. In embodiments, the ML model is trained in the supervised setup based on training data including training input data and associated ground truth data, wherein the training input data includes prior images acquired by the, or a, front layer detector, and wherein the ground truth data includes prior images acquired by the, or a, back layer detector comprising the circuitry for reducing temporal lag effects, with such circuitry being activated.

Such circuitry for reducing temporal lag effects may for example include the mentioned backside reset light facility coupled to the distal face of the back layer detector for example. As is set out further herein, in a multi-layer detector, the front layer detector generally cannot be provided with such lag correcting circuitry. The training input data may include either prior images acquired by a front layer detector (or single layer detector) in which lag correcting circuitry is not present (or, in case of a single layer detector, present but not activated) and/or prior images acquired by a single layer detector in which lag correcting circuitry is present and activated. Thus, in effect, the training input data may include front layer prior image data having temporal lag effects.

Thus, in embodiments, 2-channel training data input is used, the front layer image and the back-layer image. This allows better accounting for artifacts: generally, the observed artifacts are the result of at least two effects and their interplay: i) the lag caused by the way the detector signal is build up with signal overspill from one detection event to another, and ii) the spectral distribution of the detected signal caused by the various materials of the imaged object. The proposed two-channel ML approach represents a regularization scheme, facilitating the model to learn distinguishing the two effects i),ii): i) is eliminated or reduced, whilst ii) is better preserved in a purer form. This facilitates better spectral processing by the spectral imaging algorithm as is envisaged downstream. Such spectral imaging algorithm includes any one or more of material decomposition, decomposition into Compton and photoelectric image, computation of any one of virtual monoenergetic image, virtual contrast-agent-only image, virtual non-contrast agent image, and others where multi-energy information is needed. The two-channel approach may also be used during deployment, post-training.

In embodiments, the front layer detector is one of a single-layer-detector X-ray imaging apparatus, or wherein the front layer detector is one of the, or a multi-energy X-ray imaging apparatus, with back-layer detector removed.

Specifically, effects of lag and associated artifacts are removed, Thus, the corrected version is an estimate for the input image in an acquisition setup where there was no (or only negligible) such acquisition lag.

The proposed system addresses the issue of acquisition-lag-based artifacts in projection imagery and in their reconstruction in image domain. Unlike for back-layer detectors, in multi-layer spectral detector system (such as a dual-layer detector system), its front layer detector module cannot be furnished with the above-mentioned backside reset light or similar hardware-based lag artifact solutions, since X-ray shadows of components thereof, such as power lines, etc. would feed through into the associated back-layer X-ray image to cause its own artifacts there. The proposed system solves this problem computationally.

The system may be used in all imaging protocols and is expected to be most relevant in angiographic DSA protocols and CBCT scans with asymmetric or non-iso-centric objects, where lag artifacts are most severe.

The system is not confined for use in dual energy imaging, but can also be used in spectral imaging setups of 3 or more layers, where only the last layer is furnished with backside reset light or similar hardware-based lag error correction functionality.

The back-layer of a dual-layer detector system, thanks to its hardware-based lag error correction functionality, records no, or much less, lag artifacts compared to the front-layer. This gives a strong indication whether the front layer data suffers from a delayed signal build-up or decay during temporal (video) 2D or 3D (eg, CBCT) imaging.

In another aspect there is provided an imaging arrangement, including the system, and the multi-energy X-ray imaging apparatus.

In yet another aspect there is provided a training system, configured to train the ML model based on training data.

In yet another aspect there is provided a training data generator system, configured to generate the training data on which the model is trained by training system.

In yet another aspect there is provided a computer-implemented method for acquisition lag correction in X-ray imaging, comprising:-

receiving input including an input image acquired by a front layer detector in a multi-energy X-ray imaging apparatus; and

processing the input image into a corrected version that represents an estimate for image information at lower acquisition lag than the acquisition lag experienced for the input image.

In another aspect, there is provided a use of the corrected version in a computer-implemented reconstruction operation and/or in a computer-implemented spectral image processing algorithm. Preferably the associated back layer image (preferably acquired with lag reducing circuitry active) is so used together with the corrected front-layer image.

In yet another aspect there is provided a method of training the ML model, based on training data.

In yet another aspect there is provided a method of generating training data for use in the method training method.

The method of generating training data may include i) imaging a phantom from plural relative directions, with and/or without activation of such lag reducing circuity (LRC) for a detector of a single-layer detector, respectively in the same imaging geometry and/or ii) imaging a phantom using a multi-layer detector with phantom repositioned.

The method may be used for supervised or unsupervised learning.

The method may further include imaging a physical phantom, with or without activation of detector back-layer's lag reducing circuity.

To enable the above-mentioned scaling embodiment, the "lag-free" back-layer signal is compared it to the front layer signal to estimate the lag component when imaging phantom. The front-layer lag artifact may be estimated by recording a sequence of 2D images both with and without backside lag-correction for the back-layer. By comparing the deviations between front-layer image against the back-layer image with and without lag-correction for a 2D image sequence, one can estimate the correct scaling correction to account for the lag artefacts of the front-layer detector.

In yet another aspect there is provided a computer program element, which, when being executed by at least one processing unit, is adapted to cause the processing unit to perform any one of the above-mentioned methods.

In yet another aspect there is provided at least one computer readable medium having stored thereon the program element, or having stored thereon the trained machine learning model.

*"user"* relates to a person, such as medical personnel or other, operating the imaging apparatus or overseeing the imaging procedure. In other words, the user is in general not the patient.

In general, the term *"machine learning"* includes a computerized arrangement (or module) that implements a machine learning ("ML") algorithm. Some such ML algorithms operate to adjust a machine learning model that is configured to perform ("learn") a task. Other ML operate direct on training data, not necessarily using such as model. This adjusting or updating of training data corpus is called "training". In general task performance by the ML module may improve measurably, with training experience. Training experience may include suitable training data and exposure of the model to such data. Task performance may improve the better the data represents the task to be learned. *"Training experience helps improve performance if the training data well represents a distribution of examples over which the final system performance is measured".* The performance may be measured by objective tests based on output produced by the module in response to feeding the module with test data. The performance may be defined in terms of a certain error rate to be achieved for the given test data. See for example, T. M. Mitchell, "Machine Learning", page 2, section 1.1, page 6 1.2.1, McGraw-Hill, 1997.

*"lag"* relates to a delay in signal buildup in an X-ray detector upon exposure to X-ray radiation at a given intensity. The value registered at the pixel is hence in general incorrect and does not represent the true signal intensity. Thus, lag leads to temporal artifacts in the imagery recorded by such detectors. The reasons for lag may be found in imperfections of some of the components of such detectors, such as charge trapping in semi-conductor crystals. Artifacts in projection imagery caused by such lag are passed on to imagery derived from such projection imagery, such as imagery reconstructed by a tomographic reconstruction algorithm from such projection imagery.

*"Front layer detector",* in the context of machine learning embodiments (in particular in relation to training of machine leaning models), may not only relate to multi-detector systems, but also to more conventional detector systems (single layer detector/system) where is only a single such detector layer.

BRIEF DESCRIPTION OF THE DRAWINGS

Exemplary embodiments of the invention will now be described with reference to the following drawings wherein:

Fig. 1 shows a schematic block diagram of a medical imaging arrangement;
Fig. 2 shows a multi-layer X-ray detection system;
Fig. 3 shows a block diagram of a system for correcting projection data for lag artifacts;
Fig. 4 shows a training system for training a machine learning model for use in the system of Fig. 3;
Fig. 5 illustrates various training configurations that may be used as training data and during inference in connection with training a model for use in system of Fig. 4 above;
Fig. 6 shows a block diagram of a machine learning model that may be used in embodiments envisaged herein; and
Fig. 7 shows flow charts of a method of reducing imaged artifacts, of a training method for a machine learning model, and of a method for generating training data.

DETAILED DESCRIPTION OF EMBODIMENTS

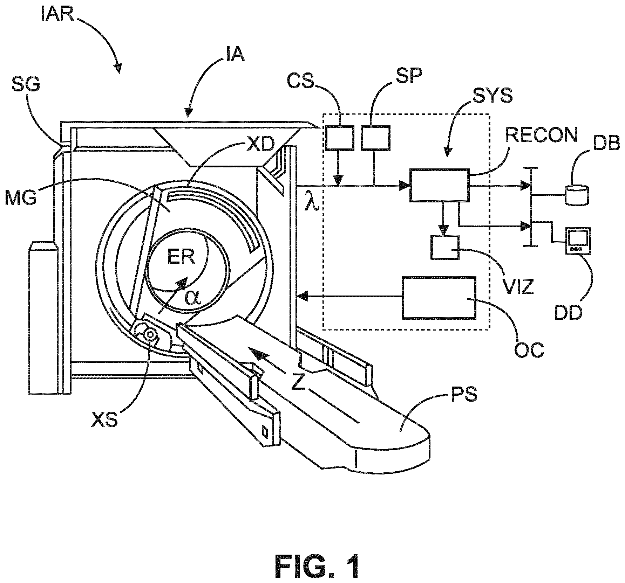

Reference is now first made to the block diagram of Fig. 1 which shows a medical imaging arrangement IAR as envisaged herein in embodiments.

The imaging arrangement IAR may include an X-ray based imaging apparatus IA, operable, for example for therapy or diagnostic purposes, to produce in an acquisition operation projection data A which may be processed by a computing system SYS.

The computing system SYS may be operable to process the projection data into tomographic imagery for example which may be stored, displayed, or otherwise processed in order to aid therapy and/or diagnostic, for statistical or educational purposes, or other applications, such as planning, control tasks, etc.

The imaging apparatus IA (also referred to herein for brevity as "imager") is X-ray based, and is configured herein for multi-energy X-ray imaging, also referred to as spectral imaging. Although purely projection-based imaging, such as radiography, is not excluded herein, tomographic imaging is mainly envisaged herein. Imagers configured for tomographic imaging envisaged herein include a CT scanner as shown in Fig. 1, or interventional imagers of the C- or U arm type., as are sometimes used for example in a Cath Lab or other. Tomosynthesis based imaging such as in mammography, or dentistry, and other, is also envisaged herein.

Briefly, and as will be expanded upon more fully, the system SYS as envisaged herein is configured to reduce, if not eliminate, certain image artifacts that may inflict the acquired projection data in some type of spectral imaging setups.

Spectral imaging, as it will be mainly referred to herein in the following, allows for material specific imaging. That is, the imagery obtainable has contrast that varies mainly, or exclusively, with concentration of a specific material of interest. Specifically, unwanted contrast contributions of intervening structures or of other materials is avoided with spectral imaging, unlike in traditional projection-based imaging of the conventional energy-integrating type.

Such material of interest whose specific distribution as present in the imager's field of view may be sought out to include the type of contrast agent material type (Iodine, Barium, or compounds thereof) such as may be used in contrast agent assisted protocols to image for structures that are natively next to transparent to X-radiation. Contrast agent accumulates in particularly in the region or organ of interest, such as in a particular vessel section in the cardiac vessel system or elsewhere for cardiac imaging, or in a section of the bowels in abdominal imaging, etc. This allows more accurate imagery which may better help in therapy, diagnostics, planning, control of a medical robot, etc.

Spectral imaging requires an imaging set-up where the imager IA is configured for multi-energy projection data acquisition. That is, for each pixel in the projection data there are at least two intensities recorded at different energy levels. Thus, in effect (at least) two sets of projection data are acquired, at least one for each energy range. This is achieved in embodiments by exposing the region of interest, such as a specific body or organ part, to X-radiation having different energy spectra. This in turn can be achieved by detector-sided solutions or source-sided solutions, amongst others. Detector-sided solutions are of main interest herein, and such include multi-layered detector modules. This allows exposing the region of interest to radiation at different spectra, thus enabling multi-energy spectral imaging.

The acquired multi-energy projection data may be processed by a spectral processor component SP to obtain the spectral imagery with the desired material specific contrast for the target material of interest.

It has been observed that in such multi-energetic projection data acquisitions as required in spectral imaging, instances of inaccurate detection of intensity signals can occur, which in turn leads to image artifacts either in the projection imagery or, as these are generally amplified, in 3D reconstructions of such material specific spectral imagery. Other types of spectral imagery that are equally affected by artifacts include virtual mono-energetic imagery, virtual non-contrast, etc.

One such cause for artifacts of this type has been found to reside in the manner of image acquisition, that is, in the manner in which the multi-energetic intensities are recorded by certain multi-layer detector systems XD, which is one example of the mentioned detector-sided spectral imaging solutions. A computer implemented correction system CS is proposed herein that corrects such artifact causing errors in the acquired multi-energy projection data. The so corrected projection data may then be passed on for further processing, such as spectral processing and/or reconstruction into tomographic imagery in image domain, as needed.

The corrector system CS may be implemented by machine learning, as will be described in more detail below. The corrector system CS may be implemented on a single computing platform, or across multiple computing platforms or systems, such as in a distributed fashion (cloud setting) on multiple computing devices, servers, etc., preferably interconnected at least in parts, in a data communication network. The artifact corrector system CS may be integrated into the imaging apparatus IA, such as in the operating console OC, or in a workstation of the imager IA, or may be otherwise integrated into the overall computing system SYS that processes the projection data as mentioned above. Alternatively, corrector system CS is integrated into imager's detector system DX.

Before explaining the artifact corrector system CS for multi-energy projection data in more detail, reference is first made to components of the imaging apparatus IA, to better provide functional context around the corrector system CS's operation.

The preferably X-ray based imager IA allows obtaining sectional, preferably 3D, imagery of the ROI. To this end, the imager IA is configured for multi-directional (indicted schematically in the Fig as "$\alpha$") projection data acquisition around the ROI. The acquisition (path), or "scan", may not necessarily define a complete 360° angular range, but 180°, or even less may be sufficient herein. The acquisition path may not necessarily define a circular arc, although in some most case this may be so. Helical paths as are also envisaged herein. Thus, the present disclosure herein is not confined to axial paths, but such are not excluded herein such as in "step-and-shoot" setups.

The imaging apparatus IA may be of the rotational type in some embodiments to effect the multi-directional projection data acquisition operation. Such a rotational imaging apparatus allows collection of projection imagery $\lambda$ along different projection directions $\alpha$ in a scan around the region of interest, such as around the mentioned stricture in a coronary vessel, etc. The imaging apparatus IA includes an X-ray source XS and the X-ray sensitive detector system XD. In some embodiments, the X-ray source XS, and opposite thereto, the X-ray sensitive detector XD, are arranged preferably on a rotatable gantry MG, mounted in an optional stationary gantry SG. An examination region may be defined by the gantries SG, MG and between source XS and detector system DX where imaged patient, or at least the region of interest, resides. Some imagers have no stationary gantry SG, and its rotatably gantry G (suitably journaled) may have a recess in which the examination region ER is so defined, as shown in the CT scanner illustrated in Fig. 1. The rotatable gantry MG may thus have a "C", "U" or similar shape, such as in C-arm imaging apparatus envisaged herein. A bi-planar imaging setup with two detectors with intersecting imaging axes (for example at right angles) is not excluded herein. Instead of using a C-arm/U-arm system, the CT scanner of Fig or similar is envisaged herein in some embodiments, and they can be of any generation, but are preferably of at least 3$^{rd}$ generation, where X-ray source XS and detector D are mounted in the rotatable gantry MG, so that they rotate together around the patient. However, for multi-directional projection data acquisition, yet higher generation CT setups are also envisaged, where there is not necessarily mechanical rotation of source and detector. Instead, a stationary ring of detectors around the ROI is used and/or stationary multiple X-sources arranged in a ring around ROI. Cone beam imaging or other divergent beam geometries are also envisaged herein, and so is imaging with a helical scan path caused by circular path of the X-ray source for example, with translational motion relative to imaging apparatus IA and ROI along patient's longitudinal axis Z. In most cases, this translational motion is caused by patient bed PS, with patient PAT on it, being translated during projection data acquisition and through the examination region ER. However, scan paths with geometry other than circular/helical are not excluded herein as mentioned earlier.

Generally, imaging/acquisition includes energizing the X-ray source XS, so that an X-ray beam XB issues forth from a focal spot of the source XS, traverses the examination region (with the region of interest in it) and interacts there with patient tissue matter. Interaction of X-ray beam XB with tissue matter causes the beam to be modified. The modified beam may then be detected at the detector system XD.

The imagery obtainable by imager IA may be stored in a memory DB, such as in an image database, may be displayed on display device DD through a visualizer VIZ, or may be otherwise processed, as desired depending on the medical task at hand.

The spectral processing component SP ("spectral processor" for short) implements a spectral (image) processing algorithm in suitable software or hardware (or partly in both). The spectral processor component SP may be part of the computing system SYS, the console OC or workstation. The spectral processor SP processes the multi-energy projection data to compute spectral imagery, that is, the material-specific tomographic or projection imagery of interest. One such spectral image algorithm is the 1976 approach of R. Alvarez & A. Macovski (published for example as "Energy-selective reconstructions in X-ray computerized tomography", Phys Med Biol, vol 21(5), pp 733-44) and similar, where the two (or more) sets for projection imagery at different energy ranges per pixel are fed into a system of simultaneous linear equations which allows solving for material specific attenuation coefficients as unknown. $N(\geq2)$-energy levels, can then help solve for $N$-different materials. Other types of material decomposition techniques have been devised, related or unrelated to the Alvarez approach, and each is envisaged herein in embodiments for the spectral processor SP.

If spectral tomographic imagery is what is sought, system SYS may further include a reconstructor RECON configured to implement a tomographic reconstruction algorithm (such FBP, iterative, algebraic, etc.) to transform projection imagery from projection domain into image domain (the portion of 3D space where the patient PAT or object to be imaged resides during imaging). The spectral processing by spectral processor SP may happen in projection domain pre-reconstruction, or in image domain post-reconstruction. Alternatively, spectral processing and reconstruction is combined.

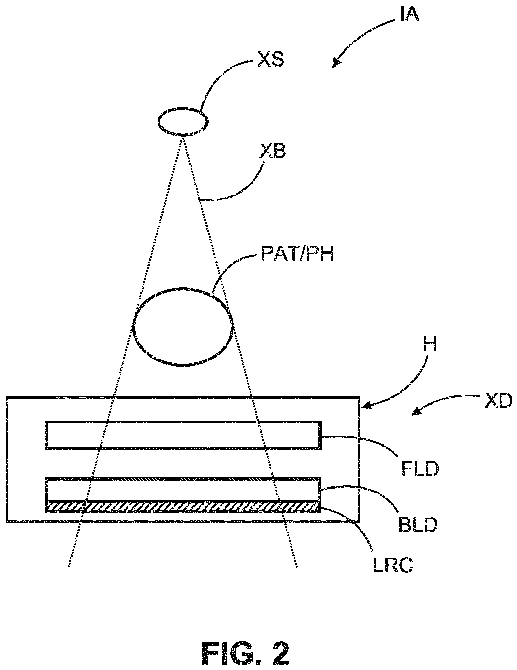

A multi-layer X-ray detector system XD as may be used herein for dual energy imaging is exemplary shown in more detail in the cross-sectional view afforded by Fig. 2 to which reference is now made.

The multi-layer X-ray detector system XD may include a housing H which houses multiple detector modules, each capable of detecting X-radiation. The plural detector modules are arranged in layers as shown in Fig. 1, including a front layer detector module FLD (also referred to herein simply as "front layer"), and a back layer detector module BLD (also referred to herein for brevity as "back layer"). This is the basic set-up for dual energy imaging and will be referred to mainly herein, although it will be appreciated by those skilled in art that the principles described herein are equally applicable to multi-energy detector systems having more than two such layers formed from plural such modules (such as three, four or more still) in multi-energy imaging setups for more than two (N>2) energy ranges, one higher than the other. Such layers include the front layer, and back layer and one or more intermediate layers in between the two. However, for present purposes all layers other than the front layer may be referred to herein as "a/the" back layer module as they are all arranged behind the front layer when viewed from the X-ray source XS. Thus, the front lay detector FLD is spatially closer, proximal, to the X-ray source XS, as compared to any of the other one or more back layers such as the single back layer BLD, which are/is distal to the X-ray source. That is, the quantifiers "front", "back" and "intermediate", etc. will be understood herein as a reference to the relative proximity of the respective layer to the X-ray source XS.

Each of the layers FLD and BLD includes an array, preferably in 2D layout in rows and columns, of X-radiation sensitive pixels. Each layer acts as a transducer to convert incoming X-ray intensities into correspondingly varying electrical charges. As the incoming X-radiation that egresses patient tissue PAT after interaction there is detected at the front layer first FLD to produce such charges. The charges are then converted by suitable A/D circuitry into a numerical format such as matrix of numbers (intensity values), each number representative of, and varying with, the respective X-ray intensity that gave rise to the specific charge. The X-radiation after interaction with the first layer passes there through and interacts in the same manner with each of the follow-up layers, such as with the back layer BLD, to similarly produce their own set of charges which are also converted by suitable A/D circuitry into a second set of projection data/projection images, and so on for any other layer, if any.

Because of the passage of the X-radiation through the first layer FLD, the spectrum of the radiation egressing the front layer has changed, and it is this radiation with changed spectrum that then interacts with the back layer BLD, thus allowing spectral imaging as the sets of two projection data obtained originate from X-radiation at different spectra. The two intensity values per pixel as included in the at least two sets of projection imagery so obtained by the multi-energy detection system XD may then be processed by spectral processor SP using a spectral imaging algorithm as mentioned earlier. The mentioned artifacts in layered multi-energy X-ray detection system XD set-ups such as the one described is due to a certain acquisition lag that are caused by the manner in which layers BLD, FLD register and convert the incoming radiation intensities into charges. Indirect or direct conversion type modules are envisaged for front FLD and back layer BLD. In each such layers of any type of modules, a layer of semi-conductor crystals is used. The interacting radiation is converted in such crystals into a cloud of electron-hole pairs, and the signal chain in each detector module uses the pairs in generating the associated measurement signal, that is, the mentioned charge. In detector module of the direct conversion type, such pairs are diffused across the crystal to generate the corresponding charge that can be sensed. In detector module of the indirect conversion type, such pairs are used to generate visible light which are then sensed by photosensors. However, in each case, direct or indirect conversion, the operation relies on generation and/or motion (diffusion) of such electron-pairs in the respective crystal layer. Such electron-hole pair generation or motion and their interaction within the detector module setup, may be hampered due to imperfections in the crystals. Such imperfections cause charge traps to form that interfere unfavorably with such electron-hole pairs (EHP). Specially, such EHPs, or parts thereof (the electron or the hole) may get trapped in such traps and cannot react as intended to the incoming X-radiation to generate the associated charge or light photons that are supposed to represent the respective local radiation intensity. That is, the expected charge is not generated at all, or, if it is, it is provided with delay. This effect is referred to as acquisition lag, a temporal effect, that causes artifacts. Thus, each pixel exposed to different radiation intensities may react in a delayed fashion, thus leading to falsely recorded intensity values in each layer for some pixels. This effect is more prevalent in medical imagery that requires recording image signals with considerable dynamics and at high speed in rotational tomographic systems of the likes described above at Fig. 1. High image gradients may foster such lag artifacts. For example, during rotation of detector, a pixel at a certain instant may be situated behind a highly attenuative object such as bone, but may then in the next instance, within fractions of milli-seconds, be exposed to much higher radiation as soon as the pixel steps out of the shade of this highly attenuated object. Such high intensity gradients may be too much to handle for detection modules of the described type that suffer from charge trapping which in turn causes delayed signal build-up. Thus, the recorded projection imagery may suffer from artifacts, that is, incorrectly recorded and attributed intensity values, which even feed through into the reconstructed imagery.

The proposed corrector system CS is configured herein to eliminate, or at least reduce, in short, correct, for such lag artifacts. The described effect of such lag and the temporal artifacts due to delayed signal capture can be to some extent mitigated using hardware solutions. One such solution may include a lag reducing circuitry LRC attached to the back layer detector module BLD. Such circuitry, for example a backside reset light circuitry, may be implemented as a matrix of visible light emitting diodes, that are placed at the distal face of the back layer detector module BLD. On activation of the lag reducing circuitry LRC, the semi-conductor (crystal) layer of the back layer BLD is exposed to visible light prior to some or each X-ray exposure. Such expose to visible light of the crystals have been found to reduce the hampering effect of such charge traps by energetically "filling" potential wells of great depth in the semi-conductor crystal lattice.

Because of its set-up as explained above, the light reducing circuitry LRC cannot be arranged at any of the front layer detector FLDs because the material of the components of such circuitry LRC may in turn lead to artifacts and reduced efficiency, not least because of the shadows such circuitry would cast on the underlying back layer detector BLD. Undesirably, back layer detector module BLD would then record such a shadows, thus compromising the projection data altogether.

Thus, what is proposed herein is to have the corrector system CS configured to remove computationally such lag related artifacts from any front layer projection imagery detected by any of the front layer detectors FLD. No intervening, signal disturbing hardware is required with the newly proposed corrector system CS. The lag reducing circuitry LRC is usually effective enough to reduce or avoid altogether the described lag related artifacts in the projection imagery recorded by the back layer BLD. The back layer detected projection imagery can be considered artifact free for present purposes. Thus, the back layer detected projection imagery does not have to be treated separately by the corrector system CS, only the front layer image detected by the one or more front layer detector module FLD will need be so processed.

The projection imagery detected by the front layer detector module FLD may for simplicity be referred to herein simply as the "front image/imagery", as opposed to the projection imagery recorded by the back layer detector module BLD which will correspondingly referred to therein on occasion as the "back image/imagery".

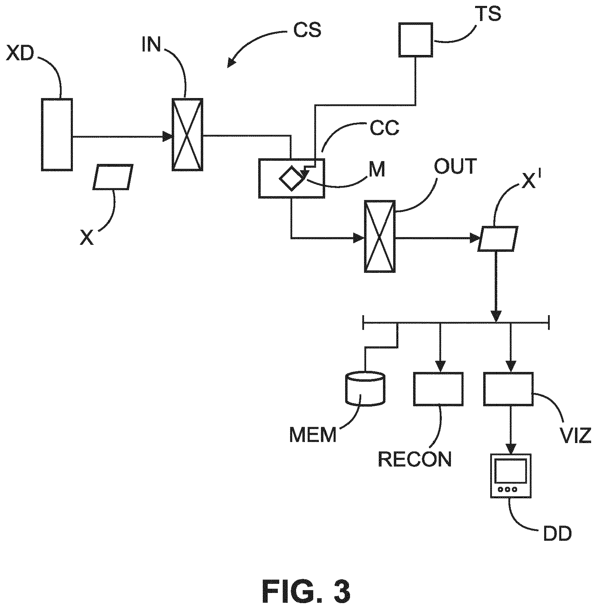

Reference is now made to the flow chart in Fig. 3 which lays bare more details of the lag induced artifact reducer or corrector system CS. In particular, a front image X as recorded by one of the front layer detector modules FLD is received at input port IN of the corrector system CS. A corrector component CC processes the so received front projection image and produces a corrected version X' thereof, which is output at output port OUT. The so corrected front image X' may then be stored, on occasion visualized by visualizer VIZ on the display device DD, or may be passed on with the back image the spectral processor SP for spectral processing and/or a reconstructor RECON to transform into image domain to obtain spectral sectional/tomographic imagery of the distribution in 3D of the specific material of interest as described. If there are more than one front layers, the system SYS may process the same jointly or separately, as required. There may be a separate constructor system CS for each of the front layers if required to better take care of the particular characteristics of each such frontal layer.

The corrector component may be implemented using machine learning (ML). Thus, corrector component CC may include a trained machine learning model M.

As such, conventional energy integrated single layer detector systems use a similar detector module, even of the same construction and make, as the detector modules used in the dual energy set-up as described in Fig. 2. Thus, the front layer detector FLD of spectral detector XD may well be used in in a conventional single detector layer image, and the single layer detector image may well be used as the described FLD module for dual/spectral imaging. This constructional fact can be harnessed herein for readily obtaining suitable training data to train the machine learning model M, as will be described in more detail below.

However, such machine learning model implementation may not necessarily be required herein because Applicant has discovered that there exists on occasions a surprisingly simple relationship based between the already artifact corrected back layer image and the corresponding lag artifact corrupted front layer image. Experiments have found that the two are related by scaling with a constant scaling factor for the whole image, or, by a scaling map with scale entries for each individual pixel position. The scaling factor(s) may be determined by linear fitting based on recording a series of such pairs of front and back images. Such linear modelling set-up may then reveal a good approximation for the scale factor which can be used in a simpler embodiment by the corrector component CC. Specifically, this scaling approach is based on scaling of the "lag-free" back image, and comparing it to the associated front image to estimate the lag component. Alternatively, it is the back image that may be so scaled. More specifically still, the front-layer lag artifact may be estimated by recording a sequence of 2D images both with and without lag reducer LRC for the back-layer BLD. By comparing the deviations between front-layer image against the back-layer image with and without lag-correction for such a 2D projection image sequence, scaling factors for correction may be estimated by linear fitting in order to account for the lag artifacts inflicting the front-layer detector module FLD. The scale factor(s) may then be applied to the corrupted front image to reveal the corrected version.

However, depending on the peculiarities of the semi-conductor crystal lattice, the distribution of the charge traps that give rise to the lag or any other factors, the relationship may be more complex. Thus, there may be a highly non-linear, more involved, relationship between the back image and the corrupted front image. It has been found that whilst analytical set-ups as the one described by linear fitting may be one way forward, a more generic modelling that does not rely on specific assumptions may yield better results. And such has been found by using neural network type models that do not require a specific modelling set-up but can be used generically to better learn this back versus front image relationship in terms of lag behavior.

Because of the spatially correlated nature of the imagery, neural networks of the convolutional types ("CNN") have been found to work particularly well. As will be explained in more detail below, some such neural network models allow for multi-scale processing which have been found to yield yet better results and are specifically envisaged herein in some embodiments. Again, details will be described below.

Explaining now in more detail some general aspects of machine learning embodiments, these require in general two phases: a prior learning phase/training phase and subsequent inference/deployment phase. Training of the ML model M is a mathematical procedure which can be done as a one-off operation, or can be done in multiple phases as new training data emerges. The training phase is based on training data which can either be artificially generated by a training data generator system TDGS as indeed envisaged in embodiments, or can be otherwise procured from a stock of existing imagery as may be found in medical databases across hospitals, medical facilities etc.

Broadly, training of the machine learning model requires adapting parameters of the model M in light of a set of suitably varied training data $(x,y)$. Herein, $x$ represents training data input that is processed by the model M to produce an output $M(x)$ which is then compared with ground truth or label $y$ a prior associated with input $x$. Thus, $x$ may be a historical or synthesized front image, and y an estimate of how an associated artifact free version of $x$ ought to like. This corresponds to supervised learning setup, which is envisaged in some embodiments herein, however, unsupervised learning set-ups based on clustering or other approach are not excluded herein. Another feature of ML learning, not generally found in analytical modelling approaches is a back-propagation feature where a mismatch between M(x) and y will be "back-propagated", or, more generally, used in adapting the current model parameters, preferably over iteration cycles. This allows for highly efficient learning and extraction of good approximations of the sought-after relationship due to "freer" modelling, without explicit analytical modelling that tends to pin down the unknown relationship to a particular form which may not always be suitable.

Lower case notation such as "*x*","*y*" will be used herein for training data, whereas data in deployment post-training will be referred to in upper case letters, such as "*X*","*Y*".

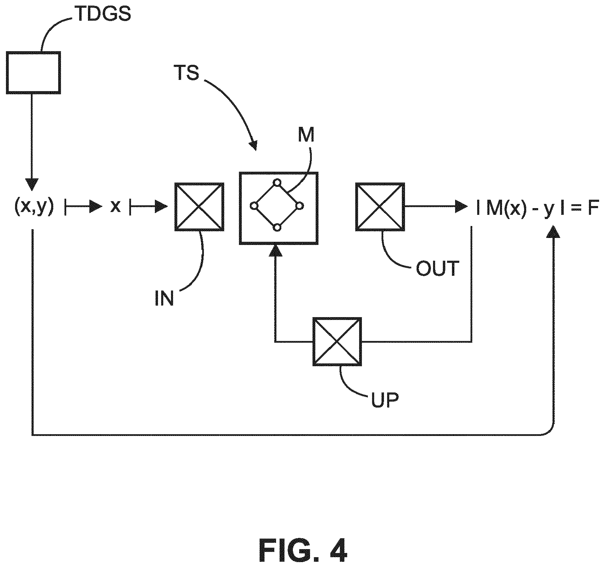

With reference to Fig. 4, there is shown a training system TS for training ML model M based on training data TD = {(*x*,*y*)}. The training data is optionally provided by the training data generator system TDGS.

In supervised settings, the training data may comprise pairs *k* of data ($x_k$, $y_k$). The training data comprises for each pair *k* (the index *k* is not related to the index used above to designate generation of feature maps), training input data $x_k$ and an associated target or ground truth $y_k$. The training data is thus organized in pairs *k* in particular for supervised learning schemes as mainly envisaged herein. However, it should be noted that non-supervised learning schemes are not excluded herein.

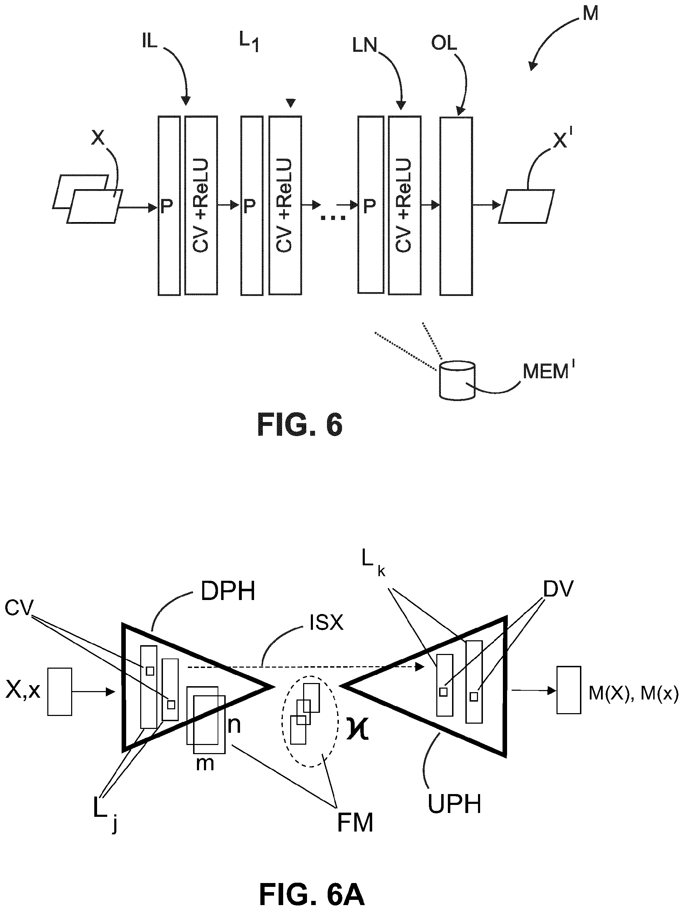

In the training phase, an architecture of a machine learning model M, such an artificial neural network (to be discussed more fully below at in Fig. 6) is pre-populated with initial set of weights or other parameters. The weights $\theta$ of the model M represent a parameterization M$^\theta$, and it is the object of the training system TS to optimize and hence adapt the parameters $\theta$ based on the training data ($x_k$, $y_k$) pairs. In other words, the learning can be formulized mathematically as an optimization scheme where a cost function F is minimized although the dual formulation of maximizing a utility function may be used instead.

Assuming for now the paradigm of a cost function *F*, this measures the aggregated residue(s), that is, the error incurred between data estimated by the neural network model M and the targets as per some or all of the training data pairs *k*:

$$argmin_\theta F = \sum_k \| M^\theta(x_k), y_k \| \qquad (1)$$

In eq (1) and below, function *M*() denotes the result of the model M applied to input x. The cost function may be pixel/voxel-based, such as the L1 or L2 cost function. In training, the training input data $x_k$ of a training pair is propagated through the initialized network M. Specifically, the training input $x_k$ for a *k*-th pair is received at an input IL, passed through the model and is then output at output OL as output training data $M^\theta(x)$. A suitable similarity measure $\| \bullet \|$ is used such as a *p*-norm derived,, squared differences, or other, to measure the difference, also referred to herein as residue, between the actual training output $M^\theta(x_k)$ produced by the model M, and the desired target $y_k$.

The output training data $M(x_k)$ is an estimate for target $y_k$ associated with the applied input training image data $x_k$. In general, there is an error between this output $M(x_k)$ and the associated target $y_k$ of the presently considered k-th pair. An optimization scheme such as back-propagation or other gradient based methods may then be used to adapt the parameters $\theta$ of the model M so as to decrease the residue for the considered pair ($x_k$, $y_k$) or a subset of training pairs from the full training data set.

After one or more iterations in a first, inner, loop in which the parameters $\theta$ of the model are updated by updater UP for the current batch of pairs { ($x_k$,$y_k$) }, the training system TS enters a second, an outer, loop where a next batch of training data pair {$x^{k+1}$, $y^{k+1}$} is processed accordingly. Whilst it is possible to loop in the outer loop over individual pairs until the training data set is exhausted, it is preferred herein to loop over sets of pairs instead (namely over the said batches of training pairs) at once. Teration in the inner loop is over parameters for all pairs making up the batch. Such batch-wise leaning has been shown to be more efficient then proceeding per pair. In the following, the subscript notation "k" to indicate individual instances of a training data pair will be largely dropped to disencumber notation.

The structure of updater UP depends on the optimization scheme used. For example, the inner loop as administered by updater UP may be implemented by one or more forward and backward passes in a backpropagation algorithm. While adapting the parameters, the aggregated, for example summed, residues of all the training pairs in a given batch are considered up to the current pair, to improve the objective function. The aggregated residue can be formed by configuring the objective function F as a sum of squared residues such as in eq. (1) of some or all considered residues for each pair. Other algebraic combinations instead of sums of squares are also envisaged.

GPUs may be used to implement the training system TS for enhanced efficiency.

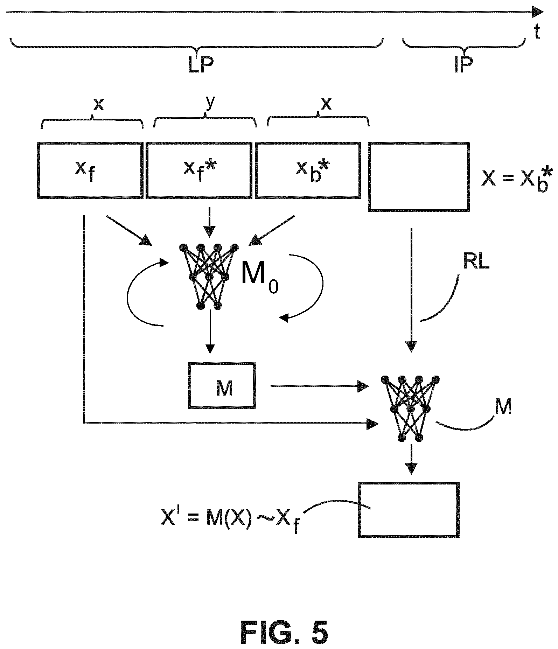

Reference is now made to Fig. 5 which illustrates in a schematic block diagram the learning phase LP, and subsequent inference/deployment phase IP. Deployment phase IP may relate to the phase where the trained model is used by corrector component CC in clinical practice where the mode is process new input X it has not "seen before", that is, input data X (e.g., a new, artifact corrupted front image) that was not drawn from training data set TD. There may also be a test phase where some training data is set aside for later use in testing phase, to test performance of the system. In general, test phase and deployment/inference are very similar.

As mentioned, training data (*x*, *y*) is either procured from a stock of prime imagery or artificially generated by imaging a phantom PH for example. The labels may be generated by using graphical touch up software by experienced human experts, but this is likely to be cumbersome and expensive. Other ways to provide in particular the associated labels y, will be described below in more detail. Training data (x,y), procured whichever way, is fed into an initial model Mo = M such as a convolutional neural network for example, having a default set of parameters. For reasons that will become apparent shortly, such CNN parameters are often referred to as filter parameters, on account of the nature of a special type of operation (convolution) used by such models. Thus, initial model $M_0$ is initialized with a default, or even arbitrary set of initial parameters, which is true not only for CNN/NN models, but also for other model types. Output of the initial model Mo(x) is compared to label y and parameters are adapted preferably iteratively in one or more cycles in the learning phase LP. Error backpropagation is preferably used in one form or another when adapting parameters for a given batch of training data processed. The two curved arrows schematically indicate the, most commonly iterative, training process in which the model parameters are adapted in light of training data instances (x,y) in iteration cycles. Once sufficiently trained (this can be established based on various criteria, such as convergence or preset number of iteration cycles, etc.), the now trained model M is then deployed in inference phase or testing as described. In deployment, given a new, lag corrupted front image X, a desired lag/artifact corrected version X' of the front image X is computed by model M where artifacts otherwise caused by the described lag mechanism are corrected for (at least reduced, or entirely eliminated). Thus, version M(X)= X' is an approximation of the pattern of intensity values that would have been obtained had there been no lag induced corruption.

Generative models such as GAN models M may be also used with benefit herein in some embodiments, where the model M is trained to "redraw" X as X', in a no-lag diction as learned from the stock of training data (X,Y). Such generative models are sometimes used to artificially generate motive images of artists that did not originally paint such motives. But in their "style". It has been found that such GAN setup can be used with benefit herein to learn drawing front images in no-lag style. In such GAN type setups, the cost function $F$ eq (1) that drives the training represents the adversarial interplay between a generator network and a discriminator network that together make up the model M in GAN. See $I$ Goodfellow et al's "Generative Adversarial Networks ", available at arXiv, under reference code arXiv: 1406.2661 (2014).

In the illustration of Fig. 5 and beyond, the subscript "$f$" indicates "front image", whilst subscript "b" is a stand-in for "back image". The asterisk symbology "*" is used herein in superscript to indicate whether the back image was acquired with hardware lag reducer circuity activated: for example, whether the backside reset light circuity was activated prior acquisition of the given back image frame, or if any other such type of lag reducing circuitry LRC was or was not activated. Thus, presence of such asterisk symbology "*" is to indicate herein that the back image was indeed recorded by prior activation of circuitry LRC, whereas a lack of asterisk indicates that no such LRC was activated, so no hardware-based temporal artifact correction was used. Thus, the asterisk relates to the use of hardware induced correction in relation to the back image acquisition. Preferably, lag reducing circuitry LRC of whichever type can be de-activated herein to allow acquisition of not corrected back images, which may be useful in facilitating obtaining training data TD as will be explained in more detail below.

It has been found that the above-described roughly linear relationship through scaling between the lag corrupted front image and the LRC-corrected back image can be harnessed herein to implement, through regulator channel RL, a data-based regularization in the training algorithm in some embodiments. Such data-based regularization allows for better, more robust learning and better performance in deployment or testing. In this based regularization embodiment, it is not only the to be corrected front image $X_f$ that is fed into the training model M for processing, but it is also through a second regularizer channel RL that the back light corrected image $X_b^*$ is fed into the model M. Thus, in proposed training embodiments, a two-channel setup is used by model M as it processes as input the front image $X_f$, and the hardware-corrected back image $X_b^*$ (thanks to the LRC circuitry) jointly processed by the model to derive the corrected version X' of the front image $X_f$. This two-channel processing allows providing context for the model M to better learn the relationship between the artifacts that compromised the front image and the corrected back image to so better learn the manner in which the lag corruption affects the imagery.

With continued reference to Fig. 5, and as illustrated there, multiple training configurations based on a different combinations of training data X are envisaged herein for use in a training system TS (see below at Fig. 6 for more details) to training model M.

For example, in one embodiment, single layer detector front image xf without lag correction is used, optionally together with back image xb* of a dual-layer detector system XD as training input. The optional use of the back image xb* implements the above mentioned regularizer channel RL. Thus, the training input data in this embodiment of training data configuration is x= xf or, optionally with regularization, x = (xf, xb*).

Without abuse of language logic, the projection image recordable by a conventional energy integrated imager with a single layer detector system (not shown) may also be likewise referred to herein as a "front image" for uniform terminology.

Single layer front image with LRC circuity lag correction xf* may be used as ground truth y for the supervised training setup, y = xf*

Such single front image xf* may be obtained by physically removing the front layer FLD in the dual imager IA and using the remaining back layer BLD with the lag corrector circuitry LRC on its own, effectively turning the dual layer imager IA temporarily into a single layer detector system. Thus, the formerly back-layer module BLD is now the front layer module. Alternatively, ground truth front image with lag correction xf* may be acquired in a different, natively single layer imager that has the same type and make of detector module as is used in the dual imager IA. Such is often the case for a given manufacturer for example, as observed earlier.

The above set of training data (x= $x_f$ , y = $x_f$*) or ( x = ($x_f$, $x_b$*), y= $x_f$*) may be obtained as follows in in the training data generator setup TDGS: The input training imagery x may be obtained by regular operation of the dual imager with its multi-layer detector XD as is, for example by imaging variations of a suitably configured phantom PH in a sufficient number of instances. The ground truth part $y = x_f$* of the training data TD may be obtained by using dual energy imager IA as described, with front layer FLD removed by acquiring the same number of images of the phantom PH, preferably in the same imaging geometry for training input x and ground truth y.

Alternatively, single-layer data without lag correction $x_f$ can come from the natively single-layer detector imager with lag correction LRC de-activated, whilst the $x_f$* image is acquired with lag correction LRC activated prior exposure as mentioned above.

Preferably, the training images are acquired in turns, for example imaging for training input x is followed by imaging for associated ground truth y or the other way around, to maintain correct association of the pairs.

Turning now to training data generation in more detail, using the above described protocols and training data configurations $(x,y)$ , generally, the single-layer front imagery and the dual-layer data (front and back imagery) for training should preferably be acquired in the same imaging geometry and preferably using the same acquisition related imaging settings (rotation speed, etc).

Thus, the training data generator system TDGS includes operating the multi-energy imager IA or the single layer imager in the above-described protocols. The training data generator system TDGS further includes causing a set of different training images to be acquired by either varying over time configurations, such as spatial configurations, of phantom PH imaged in the said protocols, or by varying imaging context (such as imager's IA settings) for a static phantom. Specially, various time dependent instances of phantom imagery are envisaged herein as controlled and administered by the training system TDGS. For example, a phantom PH may be arranged as a rotating disk with the normal vector of the disk parallel to the detector normal (2D imaging). Alternatively, a phantom PH may be arranged on a rotating table for rotational imaging geometries, such as for cone-beam CT (CBCT) or any other tomographic imaging geometry, divergent or parallel.

Alternatively, sequences of images with strongly varying dose, but using a static phantom PH, can be acquired. The dual layer data should be acquired with the same positioning as the single layer detector data.

In any of the above cases, phantom PH may include insets of different materials usually found in the human body such as water, fat, calcium, etc.

In the above mentioned two channel learning where front $x_f$ and back image $x_b$*are passed together as input into the model for data-based regularization in order to obtain the corrected version x', this can be done also during deployment. Alternatively, the two-channel approach is only used in learning but not during deployment.

The above learning setup was mainly focused on supervised learning. However, unsupervised setups are also envisaged herein.

For example, an unsupervised framework for a network learning strategy may be realized by different positionings of the phantom PH, leading to different realizations of the lag artifacts from dual-layer data (xf, xb*) alone. Based on multiple independent such artifact realizations of the same underlying scan object PH, an unsupervised learning scheme can recover the underlying ground truth image y=xf*, and reduce / remove the lag artifacts for the front-layer detector FLD. Thus, in this manner, several images xf with lag artifacts from the phantom are recorded at different positions. The training system TS may then proceed to distinguish artifact from intended image content, this dispensing with the need for a priori knowledge of xf*, thus implementing herein an unsupervised learning scheme. For example, training system TS may compare the imagery via registration to align the imagery to so distinguish artifact from the actual image content (represented here by the phantom), since one has recorded several versions / realizations of lag artifacts. Essentially artifact free imagery arrived at in this manner may then be used for training in case there is no other means to generate ground truth data available. The proposed phantom imaging would thus provide a bootstrapping way to generate ground truth data, which may then be used to an any training method to adapt parameters of the model M.

Reference is now made to Fig. 6 which shows components of a convolutional neural network CNN type model as is envisaged herein in embodiments, including convolutional filters CV to better account for the mentioned spatial correlation in the pixel data (x,y).

Specifically, Fig. 6 shows a convolutional neural network M in a feed-forward architecture. The network M comprises a plurality of computational nodes arranged in layers in a cascaded fashion, with data flow proceeding from left to right and thus from layer to layer. Recurrent networks are not excluded herein.

In deployment, or training, input data including the front image $x_f$.$X_f$ (and optionally together with the back image xb*) is applied to input layer IL. Input data is fed into model M at input layer IL, then propagates through a sequence of hidden layers L1-L3 (only three are shown, but there may be one or two, or more than three), to then emerge at an output layer OL as the training data input M(x) or the corrected front image X'. The network M may be said to have a deep architecture because it has more than one hidden layers. In a feed-forward network, the "depth" is the number of hidden layers between input layer IL and output layer OL, whilst19ecurt networks the depth is the number of hidden layers, times the number of passes.

The layers of the network, and indeed the input and output imagery, and the input and output between hidden layers (referred to herein as feature maps), can be represented as two or higher dimensional matrices ("tensors") for computational and memory allocation efficiency.

Preferably, the hidden layers include a sequence of convolutional layers, represented herein as layers $L_1$ - $L_{N-k, k>1}$. The number of convolutional layers is at least one, such as 2, 3, 4 or 5, or any other number. The number may run into double-digit Figs.

In embodiments, downstream of the sequence of convolutional layers there may be one or more fully connected layers but this is not necessarily the case in all embodiments and indeed preferably no fully connected layer is used in the architecture envisaged herein in some embodiments. Each hidden $L_m$ layer and the input layer IL implements one or more convolutional operators CV. Each layer $L_m$ may implement the same number of convolution operators CV or the number may differ for some or all layers.

A convolutional operator CV implements a convolutional operation to be performed on its respective input. The convolutional operator may be conceptualized as a convolutional kernel. It may be implemented as a matrix including entries that form filter elements referred to herein as weights $\theta$. It is in particular these weights that are adjusted in the learning phase. The first layer IL processes, by way of its one or more convolutional operators, the input data. Feature maps FM are the outputs of convolutional layers, one feature map for each convolutional operator in a layer. The feature map of an earlier layer is then input into the next layer to produce feature maps $FM^i$, $FM^{i+1}$ of a higher generation, and so forth until the last layer OL combines all feature maps into the output M(x), X'. Entries of each feature map may be described as nodes. The last combiner layer OL may also be realized as convolution that provides the corrected front image.

A convolutional operator CV in a convolutional layer is distinguished from a fully connected layer in that an entry in the output feature map of a convolutional layer is not a combination of all nodes received as input of that layer. In other words, the convolutional kernel is only applied to sub-sets of the input volume V, or to the feature map as received from an earlier convolutional layer. The sub-sets are different for each entry in the output feature map. The operation of the convolution operator can thus be conceptualized as a "sliding" over the input, akin to a discrete filter kernel in a classical convolution operation known from classical signal processing. Hence the naming "convolutional layer". In a fully connected layer an output node is general obtained by processing all nodes of the input layer.

The stride of the convolutional operators can be chosen as one or greater than one. The stride defines how the sub-sets are chosen. A stride greater than one reduces the dimension of the feature map relative to the dimension of the input in that layer. A stride of one is preferred herein. In order to maintain the dimensioning of the feature maps to correspond to the dimension of the input imagery, a zero padding layer P is applied. This allows convolving even feature map entries situated at the edge of the processed feature map.

The number of pixels of the input data so processed per output node in a given layer describes the size of the receptive field of the neural network for a given unit at this layer and is determined by the kernel size, stride and paddings of all convolution operators CV preceding this layer, where node is located. More particularly, the receptive field of the entire convolutional neural network M is the size of the region of action of the input data which "seen" i.e. processed to determine a given node of the output data. region of action is the number of nodes across the layer of the network M that contributed to a given node in the output data X', M(x).

In a preferred embodiment (see schematic inset Fig. 6A), a convolutional neural network CNN is used for model M that is configured for multi-scale processing. Such models include, for example, the U-unit architecture or its cognates, as described by O. Ronneberger et al in "U-Net: Convolutional Networks for Biomedical Image Segmentation", available online on arXiv repository under citation code arXiv: 1505.04597 (2015).

In this or similar architecture multi-scale capable NN models, de-convolutional operators DV are used. In more detail, such multi-scale enabled architecture of model M may comprise, in series, a downscale path DPH of layers and, downstream thereof, an upscale path UPH of layers. Convolutional operator with varying stride length, gradually decrease feature map size/dimension ($m \times n$) with passage through layers $L_j$ in downscale path, down to a lowest dimensional representation by feature maps, the latent representation $\kappa$. The latent representation feature maps $\kappa$ have their dimensions than gradually increased with passage through the layers $L_k$ of the upscale path UPH, back to the dimension of the original input data X. This dimensional bottleneck structure has been found to cause better learning as the system is forced to distill its learning down to a simple structure as represented by the low dimensional latent representation.

Additional regularization channels may be defined where intermediate output (intermediate feature map) from a scale level in the down-scale path is fed into a corresponding layer at a corresponding scale level in the up-scale path UPH. Such inter-scale cross connections ISX been found to foster robustness and efficiency of learning and performance.

Preferably, in any NN type model M, the receptive field of the network is chosen to cover the characteristic artifact size.

Other regression type models may be used instead of, or conjunction with NN type models, so the present disclosure is not confined to NN models.

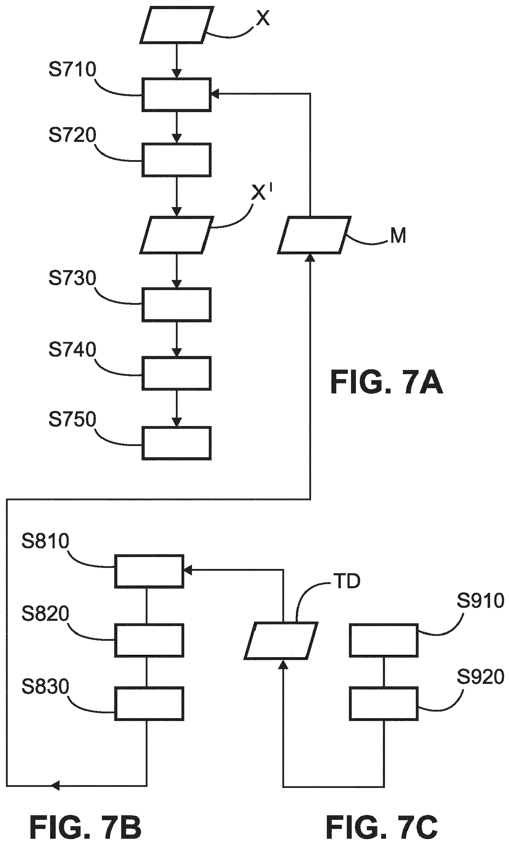

Reference is now made to the flow charts in Fig. 7 which relate to the above-described processing of deployment, ML training and, if needed, training data TD generation.

Turning first to the flow-chart in Fig. 7A, this, represents steps of a lag correction method for processing projection imagery acquired by a spectral imager IA. The data includes 2 sets of projection data, referred to as front and back image(s)/imagery, as described above. Input front image X is the result of projection data acquisition with a multi-energy detector system, as may be used in X-ray based imager IA of the radiography or multi-directional tomographic type. Thus, the multi-energy projection imagery, the front and back imagery, record the same FOV at the same imaging geometry, but at different energy ranges or spectra.

At step S710 such a, possibly lag corrupted, front image $X$ is received as acquired by front layer FLD of the multi-energy detection system DX in spectral imager IA.

The so received front image X is processed at step S720 into corrected image $X'$.

The corrected front image X' is then made available at step S730 for storing, displaying (if required), or, for further processing, for educational purposes, for statistical analysis, etc.

For example, as an optional step S740, and as mainly envisaged herein, the so corrected front image X' is then, together with the, natively LRC-circuitry-corrected, co-acquired back image (acquired by back layer BLD) passed on for processing by a spectral image processing algorithm to obtain spectrally processed projection data.

As described above in connection with Fig. 1, in such spectral projection imagery, such as a "virtual- -contrast-only" imagery, contrast is next to exclusively material specific and corresponds to a pre-selected material type chosen by the user for example. At this stage, spectral projection imagery is no longer multi-energy, but is now a single set with a single value per pixel position for any given projection direction (not counting effects from cone beam geometries or other divergent imaging geometries).

At step S750 the spectral projection imagery, as obtained in step S740, may then be reconstructed into tomographic imagery in image domain, such as an into 3D image volume or into one or more sections (slice(s)) thereof.

Machine learning may be used to implement correction operation S720. In such approaches, a trained ML model M may be used, previously trained on training data.

If machine learning is used, the steps of the method as per Fig. 7A may be used in deployment (such as in a clinical day-to-day practice) or in testing prior to deployment.

Once the model is sufficiently trained (as judged by certain criteria as mentioned earlier), the model may be used in the correction step S720.

The correction operation at step S720 is indeed preferably based on the trained machine learning model as has been described.

In a simpler, not necessarily ML approaches or simpler ML approaches with more explicit modelling, scaling factors can be determined by fitting a linear model to as series of acquired front images and their co-acquired back image counterpart. A single such scalar factor may be used, or a matrix (map) of such scaling factors is used, where the scaling factor is pixel specific. The scaling factors may then be stored in a memory MEM'. Step S720 may then be implemented by retrieving the scaling factor (s) from memory MEM', and applying same by pixelwise multiplication or division (or by other algebraic combination) to the front image X to obtained its lag corrected version X'.

If machine learning model M is used in step S720, such model can be obtained by a training method as illustrated in the flow chart of Fig. 7B, to which reference is now made.

Broadly, such method proceeds with step S810 where training data TD is received. The training data is either retrieved from existing stock of medical imagery such as may be found in medical databases, preferably including human generated annotations, or is generated synthetically as will be described below in more detail.

At step S820 the parameters of a pre-defined architecture of machine learning model M, such as a convolutional neural network, are adapted based on the training data.

The training may proceed in one or more iterations to yield a fully trained model which is then made available at step S830 for deployment or testing, where it can be used as described above in Fig. 7A. Training S820 may be a one-off, or is done repeatedly once new training data is available.

Training may be supervised, or unsupervised, such as by clustering of the training data set, or by processing with autoencoder networks (AE), including AE's of the variational type (VAE). As mentioned earlier, generative models, such as *I Goodfellow 's* GAN approach, or any of its cognates, may be used.

Rather than relying (solely) on existing, historic imagery for training data, the training data may be generated instead synthetically in a training data generation setup as illustrated in the flow chart of Fig. 7C, to which reference is now made.

In such a method, at step S910 imagery in various combinations of front and back images is generated by imaging a phantom PH for example as described above in connection with Fig. 5, with and without lag reducer circuitry activated.

Dual layer imager and/or a single layer imager may be used. Front imagery xf/xf* may be acquired by using a single layer imager instead of the dual imager IA, and imaging, in turns, phantom PH with and without lag reducer circuitry LRC activated. Imager settings (such as doses) settings may be varied for a static phantom, or the same settings are used but the phantom is moved during imaging. The single layer detector imager uses preferably the same type and/or make of detector module as is used in the multi-energy detector system XD (Fig. 2). If this is not possible, care should be taken that at least the detector module specifications are the same or at least comparable. Preferably, as a minimum, the same type (manner of doping, etc.) of semi-conductor crystals should be used in both imagers.

Alternatively to using such a single layer imager as an auxiliary, the dual imager IA itself may be operated to acquire $x_b^*$, and $x_f$. $x_f^*$ can be obtained by removing dual imager's front layer FLD, and using only the back layer BLD with the LRC circuity. In this connection, a dual imager IA, provisioned with removable front layer detector module FLD may be beneficial. For example, front layer FLD may be arranged as a slide-in/out-able unit, etc that can be slid-out and back into the housing H, as required, to so make training data generation hassle free. Alternatively, a lab-setup is used, configure to mimic properties of a real dual layer detector. Again, the phantom PH is moved during such imaging, or imager's settings are varied to generate different realizations of training data, in particular training data pairs. Other training data generation options are not excluded herein.

At step S920, once a sufficient supply of suitably varied training data images of front and back images is obtained, this is then made available as training data for a machine learning model as illustrated in Fig. 7B for example.

It has been observed that the above-described methods in Figs 7A and 7B worked particularly well if at input during inference/testing 7A and/or training 7B, it is not only the corrupted front image that is provided for processing by the machine learning model, but it is so provided in conjunction with the associated natively corrected back image. The two may then be processed jointly during inference or training to provide better context to the method so that inference and/or training can be improved. It may be sufficient to use this two-channel approach in training but not during inference. Preferably however, it is used in both in training and inference.

Components of the corrector system CS may be implemented as one or more software modules, run on one or more general-purpose processing units such as a workstation associated with the imager IA, or on a server computer associated with a group of imagers.

Alternatively, some or all components of corrector system CS may be arranged in hardware such as a suitably programmed microcontroller or microprocessor, such an FPGA (fieldprogrammable-gate-array) or as a hardwired IC chip, an application specific integrated circuitry (ASIC), integrated into the imaging system IAR. In a further embodiment still, the system SYS may be implemented in both, partly in software and partly in hardware.

The different components of corrector system CS, of the overall computing SYS, may be implemented on a single data processing unit PU. Alternatively, some or more components are implemented on different processing units PU, possibly remotely arranged in a distributed architecture and connectable in a suitable communication network such as in a cloud setting or client-server setup, etc.

One or more features described herein can be configured or implemented as or with circuitry encoded within a computer-readable medium, and/or combinations thereof. Circuitry may include discrete and/or integrated circuitry, a system-on-a-chip (SOC), and combinations thereof, a machine, a computer system, a processor and memory, a computer program.

In another exemplary embodiment of the present invention, a computer program or a computer program element is provided that is characterized by being adapted to execute the method steps of the method according to one of the preceding embodiments, on an appropriate system.

The computer program element might therefore be stored on a computer unit, which might also be part of an embodiment of the present invention. This computing unit may be adapted to perform or induce a performing of the steps of the method described above. Moreover, it may be adapted to operate the components of the above-described apparatus. The computing unit can be adapted to operate automatically and/or to execute the orders of a user. A computer program may be loaded into a working memory of a data processor. The data processor may thus be equipped to carry out the method of the invention.

This exemplary embodiment of the invention covers both, a computer program that right from the beginning uses the invention and a computer program that by means of an up-date turns an existing program into a program that uses the invention.

Further on, the computer program element might be able to provide all necessary steps to fulfill the procedure of an exemplary embodiment of the method as described above.

According to a further exemplary embodiment of the present invention, a computer readable medium, such as a CD-ROM, is presented wherein the computer readable medium has a computer program element stored on it which computer program element is described by the preceding section.

A computer program may be stored and/or distributed on a suitable medium (in particular, but not necessarily, a non-transitory medium), such as an optical storage medium or a solidstate medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope. Such reference signs may be comprised of numbers, of letters or any of alphanumeric combination.

**Claims**

1. System (SYS) for acquisition lag correction in X-ray imaging, comprising:

   an input interface (IN) for receiving input including an input image acquired by a front layer detector (FLD) in a multi-energy X-ray imaging apparatus (IA); and
   a corrector component (CC) configured to process the input image into a corrected version that represents an estimate for image information at lower acquisition lag than the acquisition lag experienced for the input image.

2. System of claim 1, wherein the processing by the corrector component (CC) includes scaling the input image with a scaling factor obtained based on a series of prior input images acquired by the, or a multi-energy X-ray imaging apparatus (IA).

3. System of claim 1 or 2, wherein the said input further includes an additional image acquired by a back-layer detector (BLD) of the multi-energy X-ray imaging apparatus (IA), the back-layer detector comprising a circuitry (LRC) for reducing temporal lag effects, the additional image having been acquired by the back-layer detector while said circuitry is activated.

4. System of any one preceding claims, wherein the corrector component (CC) is implemented based on a trained machine learning model (M).

5. System of claim 4, wherein the ML model is trained in a supervised setup based on training data including training input data and associated ground truth data, wherein the training input data includes prior images acquired by the, or a, front layer detector, and wherein the ground truth data includes prior images acquired by the, or a, back layer detector comprising the circuitry (LRC) for reducing temporal lag effects with such circuitry being activated.

6. System of claim 5, wherein the training input data further includes prior images acquired by the front layer detector, which images have temporal lag effects.

7. System of claim 5 or 6, wherein the front layer detector (FLD) is one of a single-layer-detector X-ray imaging apparatus, or wherein the front layer detector is one of the, or a multi-energy X-ray imaging apparatus, with back-layer detector (BLD) removed.

8. An imaging arrangement (IAR), including the system of any one of the previous claims, and the multi-energy X-ray imaging apparatus.

9. Computer-implemented method for acquisition lag correction in X-ray imaging, comprising:-

   receiving (S710) input including an input image acquired by a front layer detector (FLD) in a multi-energy X-ray imaging apparatus (IA); and
   processing (S720) the input image into a corrected version that represents an estimate for image information at lower acquisition lag than the acquisition lag experienced for the input image.

10. Use of the corrected version of the input image in a computer-implemented reconstruction algorithm, and/or in a computer-implemented spectral image processing algorithm.

11. Method of training the machine learning model in the system of any one of claims 4-7, comprising generating training data by i) imaging a phantom from plural relative directions, with and without activation of lag reducing circuity (LRC) for a detector of a single-layer detector, respectively in the same imaging geometry and/or ii) imaging a phantom using a multi-layer detector with phantom repositioned.

12. A computer program element, which, when being executed by at least one processing unit, is adapted to cause the processing unit to perform the method as per any one of claims 9 to 11.

13. At least one computer readable medium having stored thereon the program element of claim 12, or having stored thereon the trained machine learning model as in claims 4-7.

**FIG. 1**

**FIG. 2**

**FIG. 3**

TDGS

TS

M

$(x,y) \longmapsto x \longmapsto$

IN

$| M(x) - y | = F$

OUT

UP

**FIG. 4**

**FIG. 5**

**FIG. 6**

**FIG. 6A**

X

S710

S720

X'

M

S730

S740

S750

**FIG. 7A**

S810

S820

S830

TD

S910

S920

**FIG. 7B**          **FIG. 7C**

Europäisches
Patentamt

European
Patent Office

Office européen
des brevets

**EUROPEAN SEARCH REPORT**

Application Number

EP 22 21 1194

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 10 470 735 B2 (KONINKLIJKE PHILIPS NV [NL]) 12 November 2019 (2019-11-12) | 1,2,4, 7-10,12, 13 | INV. G01T1/17 G01T1/20 |
| Y | * column 2, lines 47-57 * | 8,11 | |
| A | * column 3, line 11 - column 5, line 10; figures 5-10 * <br> * column 6, line 64 - column 7, line 39 * <br> * column 9, line 55 - column 10, line 57 * <br> ----- | 3,5,6 | |
| X | US 7 313 218 B2 (SHIMADZU CORP [JP]) 25 December 2007 (2007-12-25) | 1,2,4, 7-10,12, 13 | |
| Y | * column 5, line 30 - column 6, line 10; figures 1-4,10-12 * | 8,11 | |
| A | * column 9, line 58 - column 10, line 51 * <br> ----- | 3,5,6 | |
| Y | FAHRIG REBECCA ET AL: "Flat-panel conebeam CT in the clinic: history and current state", JOURNAL OF MEDICAL IMAGING, SOCIETY OF PHOTO-OPTICAL INSTRUMENTATION ENGINEERS, 1000 20TH ST. BELLINGHAM WA 98225-6705 USA, vol. 8, no. 5, 1 September 2021 (2021-09-01), page 52115, XP060147058, ISSN: 2329-4302, DOI: 10.1117/1.JMI.8.5.052115 [retrieved on 2021-10-28] | 8 | TECHNICAL FIELDS SEARCHED (IPC) G01T A61B |
| A | * page 30, paragraphs 6.7,7; figures 5,6 * <br> ----- | 1-7,9-13 | |
| Y | US 10 970 887 B2 (RENSSELAER POLYTECH INST [US]) 6 April 2021 (2021-04-06) * column 14, lines 29-40 * * column 23, lines 18-27; figures 1,9,10,11 * <br> ----- | 11 | |

The present search report has been drawn up for all claims

| Place of search | Date of completion of the search | Examiner |
|---|---|---|
| The Hague | 10 May 2023 | Van Ouytsel, Krist'l |

## ANNEX TO THE EUROPEAN SEARCH REPORT
## ON EUROPEAN PATENT APPLICATION NO.

EP 22 21 1194

10-05-2023

| Patent document cited in search report | | Publication date | Patent family member(s) | | Publication date |
|---|---|---|---|---|---|
| US 10470735 | B2 | 12-11-2019 | CN | 106999132 A | 01-08-2017 |
| | | | EP | 3228074 A1 | 11-10-2017 |
| | | | JP | 6779207 B2 | 04-11-2020 |
| | | | JP | 2018504943 A | 22-02-2018 |
| | | | US | 2017325774 A1 | 16-11-2017 |
| | | | WO | 2016087242 A1 | 09-06-2016 |
| US 7313218 | B2 | 25-12-2007 | CN | 1579329 A | 16-02-2005 |
| | | | JP | 4483223 B2 | 16-06-2010 |
| | | | JP | 2005058348 A | 10-03-2005 |
| | | | KR | 20050018620 A | 23-02-2005 |
| | | | US | 2005031070 A1 | 10-02-2005 |
| US 10970887 | B2 | 06-04-2021 | US | 2019325621 A1 | 24-10-2019 |
| | | | WO | 2017223560 A1 | 28-12-2017 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **T. DUCOURANT et al.** Latest advancements in state-of-the-art aSi-based X-ray Flat Panel Detectors. *Proc. SPIE 10573,* 2018
- **T. M. MITCHELL.** Machine Learning. McGraw-Hill, 1997, 6
- **R. ALVAREZ ; A. MACOVSKI.** Energy-selective reconstructions in X-ray computerized tomography. *Phys Med Biol,* vol. 21 (5), 733-44
- **GOODFELLOW et al.** Generative Adversarial Networks. *arXiv: 1406.2661,* 2014
- **O. RONNEBERGER et al.** U-Net: Convolutional Networks for Biomedical Image Segmentation. *arXiv: 1505.04597,* 2015